# EUROPÄISCHE PATENTSCHRIFT

(11) **EP 1 503 241 B1**
(45) Veröffentlichungstag und Bekanntmachung des Hinweises auf die Patenterteilung: **18.07.2007**
(21) Anmeldenummer: 03102395.5
(22) Anmeldetag: 01.08.2003
(51) Int. Cl.: G03B 42/02, G03B 42/08, G01T 1/29, H04N 1/19

(54) **Vorrichtung zum Auslesen von in einer Speicherschicht gespeicherten Information**
Device for reading information stored in a storage sheet
Dispositif de lecture d'informations enregistrées dans une couche de stockage

(43) Veröffentlichungstag der Anmeldung: 02.02.2005
(73) Patentinhaber: Agfa-Gevaert HealthCare GmbH, 51373 Leverkusen (DE)
(72) Erfinder: Reiser, Georg, 80337, München (DE)

(56) Entgegenhaltungen:
- EP-A- 0 863 657
- US-A- 3 225 193
- US-A- 4 034 396
- US-A- 4 922 103
- US-B1- 6 369 402
- US-B1- 6 583 558
- BASS MICHAEL: "Handbook of optics; Vol. 1" 1995 , MCGRAW-HILL INC. , NEW YORK XP002262311 047740 * Seite 15.33; Abbildung 37 *
- "Fiberoptic tapers in high-resolution scientific imaging" [Online] 2000 , ROPER SCIENTIFIC, INC. XP002262312 Gefunden im Internet: <URL: http://www.roperscientific.com/pdfs/techno tes/fiberoptics.pdf> [gefunden am 2003-11-20] * Seite 2 - Seite 3; Abbildung 4 *

## Beschreibung

Die Erfindung betrifft eine Vorrichtung zum Auslesen von in einer Speicherschicht gespeicherter Information gemäß dem Oberbegriff von Anspruch 1

Im Stand der Technik erfolgt das Auslesen von in einer Speicherschicht gespeicherten Röntgeninformationen durch Anregung der Speicherschicht mit Anregungslicht und Erfassung des angeregten Emissionslichts. Dabei liegt die Wellenlänge des Anregungslichts i. A. im roten Spektralbereich und die Wellenlänge des Emissionslichts im blauen Spektralbereich. Solche Speicherschichten werden auch als Phosphorschichten oder Image Plates (IPs) bezeichnet. Als Detektoren werden Photodioden (PDs) oder ladungsgekoppelte Schaltungen (sog. Charge Coupled Devices, CCDs) auf der Basis von Silizium (Si) eingesetzt.

Die bekannten Systeme haben den Nachteil, dass Photodioden und CCD-Schaltungen auf Si-Basis eine breite spektrale Empfindlichkeit aufweisen, die vom blauen bis in den infraroten Spektralbereich reicht. Damit die Erfassung des Emissionslichts nicht durch Anregungslicht, das z. B. durch teilweise Reflexion an der Speicherschicht oder durch Transmission durch die Speicherschicht zum Detektor gelangen kann, oder andere Lichtanteile, z. B. infolge unerwünschter zusätzlicher Fluoreszenzeffekte in der Speicherschicht im infraroten Bereich, verfälscht wird, ist ein vor dem Detektor angeordnetes Filter erforderlich, welches für das Anregungslicht sowie andere unerwünschte Lichtanteile undurchlässig und für das zu erfassende Emissionslicht durchlässig ist.

Wegen der im Allgemeinen schwachen Intensität des Emissionslichts im Verhältnis zum Anregungslicht muss bei solchen Filtern die Durchlässigkeit für Emissionslicht im Verhältnis zum Anregungslicht sehr hoch sein (typ. größer als 10⁴). Neben der großen Dicke (typ. 2 bis 3 mm) solcher Filter ist auch der hohe Aufwand für deren Herstellung von Nachteil.

Da das Emissionslicht je nach Typ der Speicherschicht (z. B. Powder Image Plates (PIPs) und Needle Image Plates (NIPs) jeweils auf der Basis von BaFBr:Eu oder CsBr:Eu o. ä.) in unterschiedlichen Spektralbereichen liegt, müsste das Filter in allen diesen Spektralbereichen eine entsprechend hohe Durchlässigkeit aufweisen, damit unterschiedliche Speicherschicht-Typen mit nur einem Filter-Detektorsystem mit ausreichender Zuverlässigkeit ausgelesen werden können. Aus dem Stand der Technik sind solche Filter jedoch nicht bekannt.

Aus der EP 0 863 657 A2 ist eine Vorrichtung zum Auslesen einer Speicherleuchtstoffschicht bekannt. Zur Erfassung des Emissionslichts wird hierbei ein CCD-Sensor auf der Basis von Galliumphosphid (GaP) verwendet. Diese Vorrichtung ist im Allgemeinen für das Auslesen von Informationen aus Speicherleuchtstoffschichten unterschiedlichen Typs nicht geeignet.

Aufgabe der vorliegenden Erfindung ist es, die bekannten Vorrichtungen zum Auslesen von in einer Speicherschicht gespeicherten Informationen derart weiterzubilden, dass ihr Aufbau einfacher und kompakter wird und sie für unterschiedliche Speicherschicht-Typen geeignet sind.

Diese Aufgabe wird erfindungsgemäß gelöst durch die Vorrichtung gemäß Anspruch 1. Bevorzugte Ausführungsformen der Erfindung sind Gegenstand der Unteransprüche.

Die erfindungsgemäße Lösung beruht im Wesentlichen darauf, dass als Detektor zur Erfassung des in der Speicherschicht angeregten Emissionslichts ein Detektor auf der Basis von Gallium-Arsenid-Phosphid (GaAsP) eingesetzt wird.

Ein derartiger Detektor hat u.a. den Vorteil, dass er eine geringe Empfindlichkeit für Anregungslicht und längerwellige Lichtanteile (z. B. im Infraroten) hat. Das hat zur Folge, dass das Filter zwischen Speicherschicht und Detektor entfallen kann oder durch ein wesentlich einfacher und kompakter aufgebautes ersetzt werden kann. Ferner weist der erfindungsgemäße Detektor eine breite spektrale Empfindlichkeit im Bereich des Emissionslichts auf. Somit eignet er sich für unterschiedliche Speicherschicht-Typen. Darüber hinaus ist das thermische Grundrauschen (Dunkelstrom) bei GaAsP-Detektoren geringer als bei Detektoren auf Si-Basis.

Dokument EP1422726A, das zur Beurteilung der Neuheit gemäss 54(3) EPÜ herangezogen wird, nennt entsprechende Detektoren, ohne jedoch auf deren Vorteile bei der Verarbeitung unterschiedlicher Speicherschicht-Typen hinzuweisen.

Die erfindungsgemäße Vorrichtung kann insbesondere eines oder mehrere der folgenden Merkmale, und zwar einzeln oder in Kombination miteinander, aufweisen, deren Vorteile im Zusammenhang mit der Beschreibung der bevorzugten Ausführungsformen genannt werden:
- die Detektorvorrichtung ist ein Photodioden-Detektor oder ein CCD-Detektor;
- die Detektorvorrichtung umfasst mehrere Einzelelemente, die in wenigstens einer Zeile angeordnet sind;
- die lichtempfindlichen Schichten der Einzelelemente grenzen im wesentlichen unmittelbar aneinander;
- das Emissionslicht, das von der Speicherschicht ausgesandt wird, wird von der Speicherschicht über eine Lichtleitervorrichtung und/oder eine Abbildungsoptik zu der Detektorvorrichtung übertragen;
- die Lichtleitervorrichtung umfasst wenigstens einen Lichtleiter, der einen Kern und einen Mantel aufweist, wobei der Brechungsindex des Kerns höher ist als der des Mantels;
- die Lichtleitervorrichtung umfasst mehrere Lichtleiter, die gebündelt sind;
- die mehreren Lichtleiter weisen jeweils einen Querschnitt in der Form eines regelmäßigen Polygons auf, das insbesondere ein Sechseck oder ein Quadrat ist;
- jeder der mehreren Lichtleiter ist im wesentlichen einem Einzelelement der Detektorvorrichtung zugeordnet;
- im Querschnitt ist die Ausdehnung jedes der mehreren Lichtleiter wenigstens in einer Richtung kleiner als die Ausdehnung des entsprechenden Einzelelements der Detektorvorrichtung in derselben Richtung;
- der Abstand der Lichtleitervorrichtung von der Detektorvorrichtung, insbesondere von der lichtempfindlichen Schicht der Detektorvorrichtung, und/oder von der Speicherschicht kleiner als 400 µm und insbesondere kleiner als 200 µm ist;
- die Lichtquelle und die Detektorvorrichtung befinden sich auf den gegenüberliegenden Seiten der Speicherschicht;
- die Lichtquelle und die Detektorvorrichtung befinden sich auf derselben Seite der Speicherschicht;
- das Anregungslicht von der Lichtquelle wird schräg oder seitlich in die Speicherschicht eingekoppelt;
- die Lichtleitervorrichtung ist blau eingefärbt;
- die Lichtleitervorrichtung ist mit der Detektorvorrichtung verklebt oder verkittet;
- ein Filter ist vor der Detektorvorrichtung angeordnet, durch welches Anregungslicht und längerwelliges Licht abgeschwächt wird;
- das Filter ist ein Dünnschichtfilter oder ein Folienfilter mit einer Dicke von weniger als 100 µm;
- der Spektralbereich des Anregungslichts wird in Abhängigkeit von der Speicherschicht gewählt.

Die Erfindung wird im Folgenden anhand von Ausführungsbeispielen erläutert, wobei Bezug genommen wird auf die beigefügten Zeichnungen.

Es zeigen:
- Fig. 1A und 1B: schematisch die wesentlichen Komponenten zweier Vorrichtungen zum Auslesen von in einer Speicherschicht gespeicherter Information gemäß einer Ausführungsform der Erfindung.
- Fig. 2A und 2B: schematisch die Vorrichtung nach Fig. 1A mit einem Detektor-Array bzw. das Detektor-Array in Draufsicht.
- Fig.3A und 3B: schematisch eine Vorrichtung gemäß der Erfindung mit einem Detektor-Array bzw. das Detektor-Array in Draufsicht.
- Fig. 4: schematisch einen Längsquerschnitt durch einen Lichtleiter nach dem Stand der Technik.
- Fig. 5A bis 5C: Beispiele für Formen des Querschnitts eines in der erfindungsgemäßen Vorrichtung verwendeten Lichtleiters.
- Fig. 6A und 6B: schematisch Einzelheiten der Ausführungsform der Erfindung nach Fig. 3A und 3B.

Die Figuren zeigen keine maßstabsgetreuen Darstellungen.

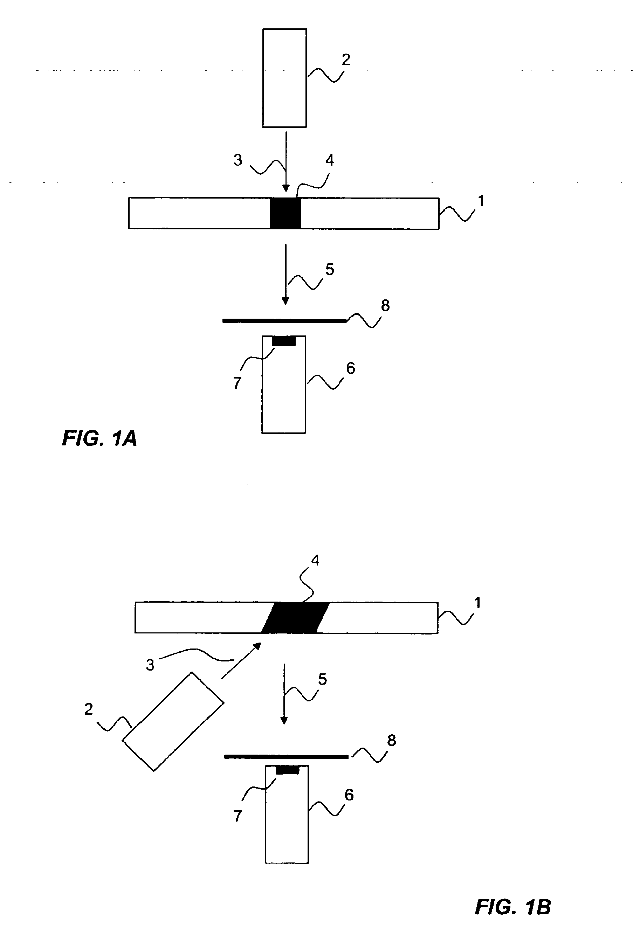

In Fig. 1A ist schematisch der Aufbau einer Auslesevorrichtung zum Auslesen von Information, die in einer Speicherschicht 1 gespeichert ist, gezeigt. Die Vorrichtung umfasst eine Lichtquelle 2 zum Aussenden von Anregungslicht 3. Durch das Anregungslicht 3 wird ein Bereich 4 in der Speicherschicht 1 angeregt, so dass er Sekundär- oder Emissionslicht 5 abstrahlt. Das Emissionslicht 5 wird von einer Detektorvorrichtung 6 erfasst, und die Signale der Detektorvorrichtung 6 werden anschließend in einer (nicht dargestellten) Signal- und Datenverarbeitung ausgewertet. Zum Erfassen des Emissionslichts umfasst die Detektorvorrichtung 6 eine lichtempfindliche Schicht 7.

Im Allgemeinen unterscheiden sich das Anregungslicht 3 und das Emissionslicht 5 in ihrer Wellenlänge: Das Anregungslicht liegt bei längeren Wellenlängen als das Emissionslicht.

In Fig. 1B ist ein analoger Aufbau wie in Fig. 1A gezeigt, der sich von letzterem dadurch unterscheidet, dass er "in Reflexion" betrieben wird, während der Aufbau in Fig. 1A "in Transmission" betrieben wird. Dementsprechend sind alle Komponenten in Fig. 1A und Fig. 1B gleich und mit derselben Bezugsziffer versehen.

Insbesondere unterscheiden sich die Darstellungen in Fig. 1A und in Fig. 1B durch die Form des jeweils angeregten Bereichs 4 in der Speicherschicht 1. In Fig. 1B ist der Bereich 4 als schiefes Parallelogramm dargestellt, während der Bereich 4 in Fig. 1A als Quadrat gezeigt ist. Die in Fig. 1B von der in Fig. 1A abweichende Form des Bereiches 4 ist durch den schrägen Einfall des Anregungslichtes 3 in der Speicherschicht 1 bedingt.

Während im Stand der Technik zur Erfassung des Emissionslichts Si-Detektoren verwendet werden, die einen sehr breiten Empfindlichkeitsbereich zwischen etwa 300 nm und 1100 nm haben, basieren die lichtempfindlichen Schichten 7 der Detektoren 6 in den Aufbauten nach Fig. 1A und 1B gemäß der Erfindung auf Gallium-Arsenid-Phosphid (GaAsP), dessen Empfindlichkeitsbereich hauptsächlich im Blauen liegt. Der Empfindlichkeitsbereich (die sog. spectral response) der Detektoren 6 liegt vorzugsweise zwischen etwa 280 nm und 580 nm und ist zwischen etwa 380 nm und 500 nm am größten. Die größte Empfindlichkeit (die sog. peak sensitivity) der erfindungsgemäßen Detektoren 6 liegt typischerweise bei etwa 470 nm.

Vorzugsweise werden Diffusionstyp-GaAsP-Photodioden mit kurzwelligem Empfindlichkeitsbereich (sog. diffusion type GaAsP photodiodes of short-wavelength type) eingesetzt. Hierfür sind z. B. die Photodioden mit der Typennummer G5645, G5842, G6262 oder G7189 der Firma HAMAMATSU besonders geeignet.

Detektoren auf der Basis von GaAsP weisen in den genannten Spektralbereichen i. A. eine höhere Empfindlichkeit auf als Si-Detektoren. Durch die Erfassung des Emissionslichts 5 mit GaAsP-Detektoren wird daher insgesamt ein besseres Signal/Rausch-Verhältnis erreicht als mit Si-Detektoren.

Die Breite der Empfindlichkeitsbereiche der GaAsP-Detektoren ist dabei ausreichend groß, um das in unterschiedlichen Wellenlängenbereichen emittierte Emissionslicht 5 von Speicherschichten 1 unterschiedlichen Typs mit jeweils ausreichend hoher Empfindlichkeit erfassen zu können. Größere Einbußen im Signal/Rausch-Verhältnis können hierdurch vermieden werden.

Um das Anregungslicht 3, aber auch sonstiges Streulicht zu diskriminieren, werden im Stand der Technik spezielle Filter vor dem Detektor 6 angeordnet. Diese reduzieren jedoch die Ausbeute an Emissionslicht 5 im Detektor 6. Außerdem wird durch ihre endliche Dicke der Abstand der optischen Komponenten, zwischen denen sie angeordnet sind, zwangsläufig vergrößert. Ausgehend von diesem Nachteil, wird durch den erfindungsgemäßen Einsatz von GaAsP-Detektoren mit der oben beschriebenen Lage und Breite des Empfindlichkeitsbereichs der Vorteil erzielt, dass das Anregungslicht 3, das in einem längerwelligeren Spektralbereich zwischen typischerweise 600 nm und 800 nm liegt, durch die inhärenten Eigenschaften des Detektors 6 automatisch unterdrückt wird. Dadurch eröffnet sich die überraschende Möglichkeit, bei Speicherschichten unterschiedlichen Typs, welche i. A. unterschiedliche Anregungswellenlängen erfordern, auf ein Filter zum Abschwächen des Anregungslichts 3 verzichten zu können oder ein wesentlich einfacher aufgebautes und dünneres Filter zu verwenden. Nur das Emissionslicht 5, in welchem die auszulesende Information enthalten ist, wird dann durch den jeweiligen GaAsP-Detektor 11 erfasst, wohingegen Licht mit größerer Wellenlänge unberücksichtigt bleibt.

In den dargestellten Beispielen der Figuren 1A und 1B ist dennoch jeweils ein dünnes Filter 8 vor der Detektorvorrichtung 6 vorgesehen, um Anregungslichtanteile oder längerwellige Lichtanteile mit besonders hoher Effizienz zu unterdrükken. Dies kann insbesondere dann von Vorteil sein, wenn längerwellige Lichtanteile, z. B. im Infraroten, zu einer unerwünschten Erwärmung der Detektorvorrichtung 6 führen würden.

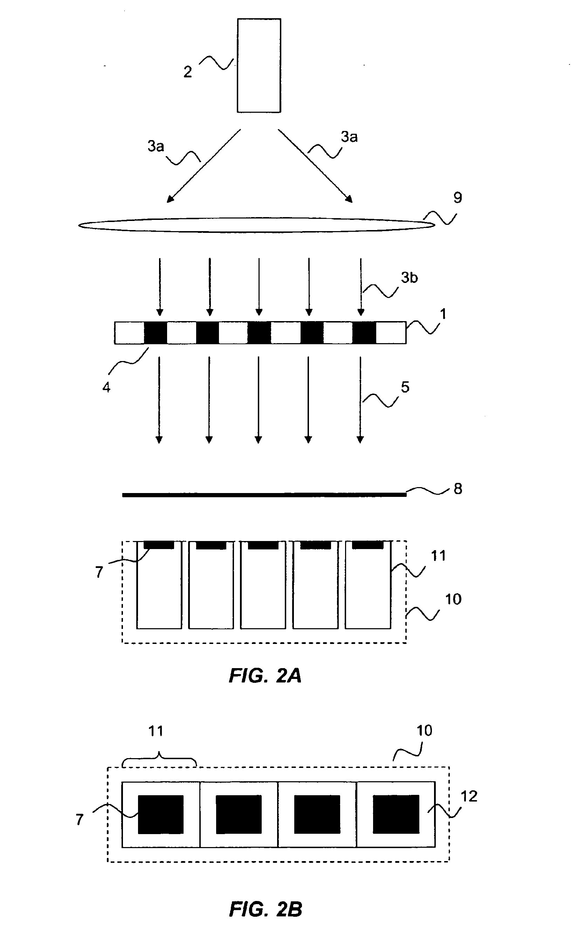

Eine Weiterbildung der Vorrichtung nach Fig. 1A (oder mit entsprechender, nicht gezeigter Modifizierung auch nach Fig. 1B) besteht darin, dass statt eines einzigen Detektors 6, der einen Bereich 4 in der Speicherschicht 1 ausliest, eine Detektormatrix 10 mit mehreren einzelnen Detektorelementen 11 verwendet wird, so dass gleichzeitig mehrere Bereiche 4 in der Speicherschicht 1 ausgelesen werden können. Eine derartige Vorrichtung ist in Fig. 2A als Blockdiagramm gezeigt.

Das Anregungslicht 3a von der Lichtquelle 2 wird so aufbereitet, dass von der Lichtquelle 2 gleichzeitig mehrere Bereiche 4 in der Speicherschicht 1 belichtet werden. Dazu wird beispielsweise divergentes Anregungslicht 3a von der Lichtquelle 2 durch eine Optik 9 parallelisiert und als paralleles Anregungslicht 3b auf die Speicherschicht 1 gelenkt. Alternativ kann stattdessen ein (nicht dargestelltes) Array von Laserdioden als Lichtquelle für die auszulesenden Bereiche 4 der Speicherschicht 1 eingesetzt werden, wobei die einzelnen, von benachbarten Laserdioden belichteten Bereiche 4 gegebenenfalls auch überlappen können.

Das von den Bereichen 4 in der Speicherschicht 1 ausgehende Emissionslicht 5 wird von den einzelnen Elementen 11 der Detektormatrix 10 mit ihren jeweiligen lichtempfindlichen Schichten 7 aufgefangen. Im dargestellten Beispiel haben die Einzelelemente 11 dabei einen bestimmten Abstand voneinander, so dass sie aus Sicht von oben wie in Fig. 2B gezeigt angeordnet sind. Um jede lichtempfindliche Schicht 7 befindet sich in gleicher horizontaler Ebene wie die lichtempfindliche Schicht 7 ein Freiraum 12, der die lichtempfindliche Schicht 7 eines jeden Einzelelements 11 umrahmt.

Wie in Fig. 1A und 1B ist zu Zwecken der Diskriminierung unerwünschter Strahlung auch in dem Aufbau nach Fig. 2A ein dünnes Filter 8 vor der Detektormatrix 10 vorgesehen.

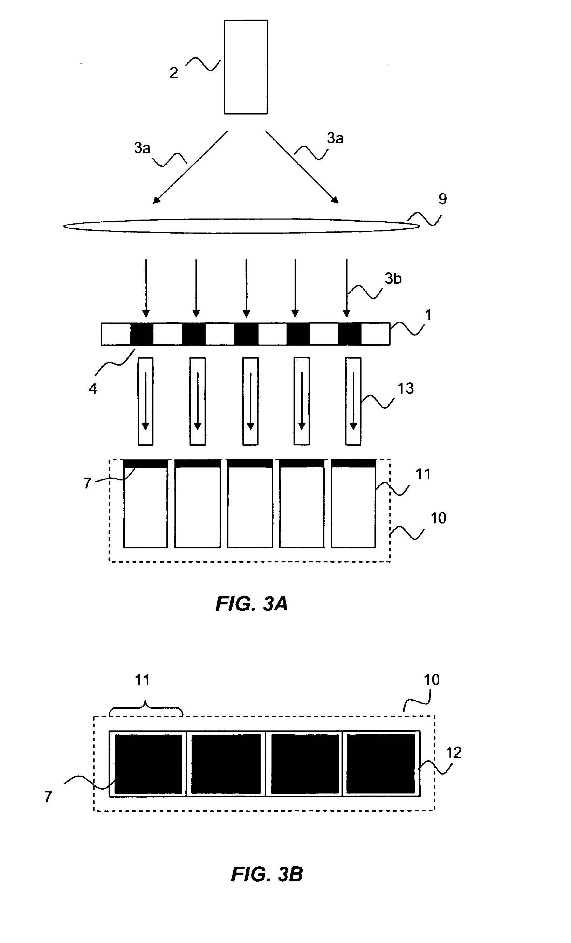

In Fig. 3A ist die Vorrichtung nach Fig. 2A mit erfindungsgemäßen Veränderungen gezeigt, die im Folgenden erläutert werden. Der Aufbau auf der Anregungsseite ist der gleiche wie in Fig. 2A. Es wird eine Detektormatrix 10 zum Erfassen des Emissionslichts 5 eingesetzt, die aus mehreren Detektorelementen 11 besteht.

Der GaAsP-Detektor kann ein einzelner Detektor sein, d. h. eine einzelne Photodiode, oder er kann sich aus mehreren Dioden zu einem Array zusammensetzen, oder es kann ein CCD-Detektor auf der Basis von GaAsP verwendet werden. Der Detektor kann als einzeiliges oder als mehrzeiliges Photodioden- bzw. CCD-Array (Matrix) aufgebaut sein.

In einer besonders bevorzugten Ausführungsform werden die lichtempfindlichen Flächen des CCD-Arrays bzw. der einzelnen GaAsP-Photodioden soweit ausgedehnt, dass die lichtempfindlichen Flächen in der Matrix benachbarter Detektorelemente unmittelbar aneinander grenzen. Dies ist genauer in Fig. 3B dargestellt, die mit Fig. 2B zu vergleichen ist. Im Gegensatz zu Fig. 2B ist in Fig. 3B die lichtempfindliche Schicht 7 in ihrer horizontalen Ausdehnung erweitert worden, so dass sie praktisch die gesamte Grundfläche des Detektorelements 11 abdeckt. Damit ist die freibleibende Fläche 12 vernachlässigbar klein, und die lichtempfindlichen Flächen 7 aller Detektorelemente 11 grenzen praktisch direkt aneinander an. Dies hat den Vorteil einer höheren Ausbeute an Emissionslicht, es gibt also keinen Intensitäts- und Informationsverlust entlang des (CCD-) Arrays.

In Fig. 3A wird idealerweise darüber hinaus zur Verbesserung der Lichtübertragung des Emissionslichts von der Speicherschicht 1 zum Detektor 10 ein Lichtleiter 13 vor jedem Detektorelement 11 verwendet. Damit wird ein Aperturwinkel von bis zu 180° möglich, so dass die von dem Detektor erfasste Emissionslichtintensität erhöht wird. Beispielsweise wird sie etwa doppelt so hoch wie bei Mikrolinsen- oder Gradienten-Index-(GRIN)-Linsen-Arrays.

Bei Verwendung eines GaAsP-Detektors oder einer GaAsP-Detektormatrix kann, wie bereits erwähnt, das Filter 8 zum Abschwächen von - insbesondere gestreutem - Anregungslicht entfallen oder durch ein wesentlich einfacher aufgebautes und dadurch dünneres Filter ersetzt werden. Dadurch kann der Detektor 10 bzw. die Detektorvorrichtung sehr nahe an den Lichtleitern 13 angeordnet werden. Die Distanz zwischen den lichtempfindlichen Flächen 7 des Detektors 10 und Lichtleitern 13 kann dabei etwa 100 µm betragen. Der gleiche oder ein kleinerer Abstand wird nach Möglichkeit auch zwischen dem anderen Ende des Lichtleiters 13 und der Speicherschicht 1 eingehalten, so dass eine ausreichend hohe Ortsauflösung gewährleistet ist.

Allgemein ist es für die Ortsauflösung von großem Nutzen, wenn kein dickes Filter zwischen dem Lichtleiter 13 und dem Detektor 10 erforderlich ist, was aus den oben genannten Gründen nur bei der Verwendung eines GaAsP-Detektors gewährleistet ist. Mit anderen Worten: Die Kombination von einem GaAsP-Detektor und einem Lichtleiter in einem Aufbau nach Fig. 3A führt zu einem besseren Signal/Rausch-Verhältnis bei gleichzeitig höherer Ortsauflösung und damit insgesamt zu einer höheren Bildqualität.

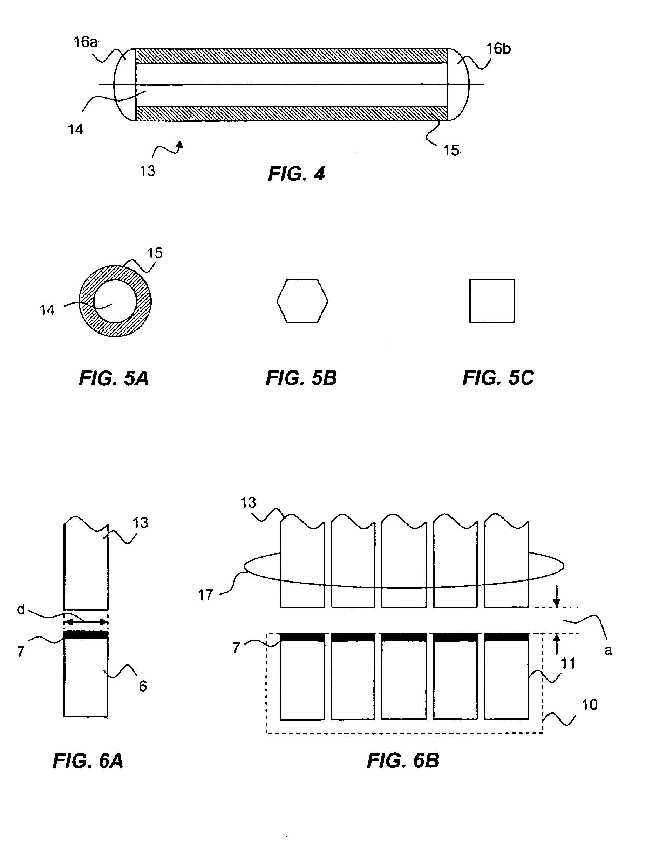

In Fig. 4 ist ein Lichtleiter 13 im Längsquerschnitt gezeigt, wie er im Rahmen dieser Erfindung zwischen der Speicherschicht 1 und einem der Detektorelemente 11 eingesetzt werden kann. Der Lichtleiter 13 weist in der gezeigten Ausführungsform ein "Kern-Mantel-System" mit einem Faser-Kern 14 und einem Faser-Mantel 15 auf. Der Kern 14 ist umgeben von dem Mantel 15, wobei der Kern 14 der Faser einen höheren Brechungsindex als der Mantel 15 der Faser hat.

Zusätzlich weist der gezeigte Lichtleiter 13 an seinen beiden Enden noch jeweils eine (optionale) Eintrittslinse 16a und eine (optionale) Austrittslinse 16b auf, durch die die Ein- und Auskopplungseigenschaften der Faser verbessert werden bzw. an die spezielle Geometrie der Lichtübertragung des Emissionslichtes angepasst werden.

Der Lichtleiter kann aus Glas oder einem geeigneten Kunststoff hergestellt werden. Sein Querschnitt in einer Ebene senkrecht zu seiner Längsachse kann verschiedene Formen annehmen, von denen einige in Fig. 5A, 5B und 5C gezeigt sind. Der Querschnitt in Fig. 5A entspricht dem in Zusammenhang mit Fig. 4 erläuterten "Kern-Mantel-System" mit einem innen liegenden Kern 14 und einem außen liegenden Mantel 15. Der Lichtleiter 13 nach Fig. 5B ist ein einfacher Lichtleiter ohne "Kern-Mantel-System" mit einer nicht dargestellten Ummantelung zu seiner optischen Isolierung von Nachbarlichtleitern. Im Querschnitt ist er sechseckig. Alternativ kann er im Querschnitt auch quadratisch geformt sein, wie es in Fig. 5C gezeigt ist. Allgemein kann sein Querschnitt ein regelmäßiges Polygon sein.

Wenn mehrere Lichtleiter parallel zueinander verlaufen, so können sie insbesondere zu einer sog. "Fiberplate" zusammengefasst werden. In diesem Fall werden die Lichtleiter zu einer "Fiberplate" gebündelt, und das Emissionslicht von dem gesamten (z. B. linienförmigen) Ausschnitt der Speicherschicht wird über die "Fiberplate" zum Detektor geleitet. Dabei kann jeder Lichtleiter der "Fiberplate" grundsätzlich einen beliebigen Querschnitt aufweisen. So ergibt sich beispielsweise bei Lichtleitern mit einem Querschnitt in Form eines regelmäßigen Sechsecks eine dichte Wabenstruktur der "Fiberplate".

In Fig. 6A ist zur Erläuterung einer wichtigen weiteren Eigenschaft der Lichtleiter-Detektor-Struktur gemäß der vorliegenden Erfindung nochmals ein einzelner Detektor 6 mit dazugehörigem Lichtleiter 13 gezeigt. Aus dieser Darstellung wird ersichtlich, dass bei einer bevorzugten Ausführungsform der Erfindung die Breite des Lichtleiters 13 höchstens gleich groß wie, vorzugsweise aber deutlich kleiner als die Breite der lichtempfindlichen Fläche 7 des Detektors 6 ist. Mit anderen Worten: Sowohl die Breite des Lichtleiters 13 als auch die Breite der lichtempfindlichen Fläche 7 des Detektors 6 betragen vorzugsweise höchstens "d", besonders bevorzugt ist die Breite des Lichtleiters 13 aber kleiner als "d". Dadurch wird ein Verlust an Ortsauflösung bei einer Detektormatrix 10 minimiert.

In Fig. 6B ist ein Aufbau einer Detektormatrix 10 mit vorgeschalteten Lichtleitern gezeigt. Die Lichtleiter 13 sind in dieser Ausführungsform zu einem Bündel 17 zusammengefasst, d. h. miteinander verklebt oder verkittet. Der Abstand "a" des Lichtleiterbündels 17 vom Detektor ist dabei kleiner als 400 µm, insbesondere kleiner 200 µm. Dieser Abstandswert "a" hängt von der Breite "d" der lichtempfindlichen Schicht 7 des Detektorelements 11 ab, wobei der zulässige Abstand "a" mit der Breite "d" zunimmt. Mit diesem Aufbau lässt sich somit eine hohe Ortsauflösung erreichen.

In einer (nicht dargestellten) bevorzugten Ausführungsform der Erfindung ist der Lichtleiter 13 bzw. das Lichtleiterbündel 17 darüber hinaus mit dem Detektor 6/der Detektormatrix 10 verklebt oder verkittet. Damit lassen sich die Brechungsindexunterschiede gering halten und die Reflexionsverluste für das Emissionslicht reduzieren.

Die Lichtleiter lassen sich auf vielfältige Art weiter modifizieren. So können die Lichtleiter insbesondere blau eingefärbt werden, so dass das Emissionslicht weiterhin ungehindert hindurch treten kann, das Anregungslicht jedoch zusätzlich abgeschwächt wird. Statt Einfärbung der Lichtleiter kann ein Filter vor dem Detektor angeordnet werden, um das Anregungslicht und langwellige Lichtanteile zu unterdrücken. In diesem Fall muss das Filter ein Dünnschichtfilter (Reflexionsfilter) oder Folienfilter mit einer typischen Dicke von weniger als 100 µm sein, um die Ortsauflösung nicht zu beeinträchtigen.

Außerdem eröffnet aufgrund der spektralen Empfindlichkeit des GaAsP-Detektors die Erfindung die Möglichkeit, den Spektralbereich des Anregungslichts an unterschiedliche Speicherschicht-Typen anzupassen. So kann als Wellenlänge des Anregungslichts z. B. 635 nm verwendet werden, wenn die Speicherschicht eine BaFBr:Eu-Speicherschicht ist, und als Wellenlänge des Anregungslichts kann 685 nm verwendet werden, wenn die Speicherschicht eine CsBr:Eu-Speicherschicht ist. Damit lassen sich eine höhere Absorption des Anregungslichts und eine höhere Emissionslichtausbeute erreichen. Da die Detektorempfindlichkeit oberhalb von etwa 550 nm sehr niedrig ist, kann die Anregungslichtwellenlänge oberhalb von 550 nm variiert werden, ohne dass zusätzliche Maßnahmen, wie z. B. Filterwechsel, erforderlich sind, wie es im Stand der Technik der Fall wäre.

Die Erfindung wurde anhand eines Aufbaus erläutert, bei dem die Vorrichtung "in Transmission" betrieben wird. Selbstverständlich ist die Erfindung nicht darauf beschränkt, sondern kann beispielsweise auch "in Reflexion" betrieben werden, in der Art also, wie es in Fig. 1B gezeigt ist.

Beim Auslesen der Speicherschicht in "Transmissionsgeometrie" befinden sich Anregungslichtquelle und Detektor auf den gegenüberliegenden Seiten der Speicherschicht. Dies hat den Vorteil, dass der Detektor bzw. die Lichtleiter beliebig nahe (typ. bis zu etwa 100 µm) an der Speicherschicht angeordnet werden können, womit eine hohe Ortsauflösung bei sehr großem Aperturwinkel gewährleistet ist.

Wenn dagegen das Auslesen der Speicherschicht in "Reflexionsgeometrie" erfolgt, so befinden sich die Anregungslichtquelle und der Detektor auf derselben Seite der Speicherschicht. In dieser Geometrie wird die Streuung des Anregungslichts in der Speicherschicht genutzt, d. h. das Anregungslicht fällt schräg in die Speicherschicht ein oder wird seitlich eingekoppelt. In der Speicherschicht wird das Anregungslicht gestreut, und es wird das Emissionslicht durch den Detektor erfasst, welches von denjenigen Bereichen der Speicherschicht emittiert wird, in welche das Anregungslicht gestreut wird. Durch Nutzung des Streueffektes kann der Detektor bzw. sein Lichtleiter sehr nahe an der Speicherschicht angeordnet werden, ohne die Einkopplung des Anregungslichts zu behindern.

Die Ausdehnung und Anzahl der Detektorelemente ist ebenfalls nicht auf die gezeigten Beispiele beschränkt. So können sowohl die Ausdehnung als auch die Anzahl der Detektorelemente in den beiden Richtungen ihrer gemeinsamen Ebene unterschiedlich sein, so dass z. B. die Ausdehnung eines Detektorelements in einer ersten Richtung beispielsweise nur halb so groß ist wie in der anderen Richtung. Dafür können in der ersten Richtung aber doppelt so viele Elemente wie in der anderen Richtung vorgesehen sein, etc.

Auch die geometrische Form der Detektorelemente ist nicht auf die quadratische Form beschränkt: statt eines Quadrats kann die lichtempfindliche Schicht eine sechseckige Fläche im Detektorelement belegen, so dass sich beim Zusammenbau aller Detektoren eine Wabenstruktur ergibt.

### Bezugszeichen

- 1: Speicherschicht
- 2: Lichtquelle für Anregungslicht
- 3: Anregungslicht
- 4: belichteter/ausgelesener Bereich in Speicherschicht
- 5: Emissionslicht
- 6: Detektorvorrichtung
- 7: lichtempfindliche Schicht
- 8: Filter vor der Detektorvorrichtung
- 9: Strahlformungslinse vor Lichtquelle für Anregungslicht
- 10: Detektormatrix
- 11: Einzelelement der Detektormatrix
- 12: Randbereich von Einzelelement
- 13: Lichtleiter
- 14: Kern
- 15: Mantel
- 16: Abbildungsoptik: 16a Eintrittlinse von Lichtleiter, 16b Austrittslinse von Lichtleiter
- 17: Lichtleiterbündel
- a: Abstand zwischen Lichtleiter und Detektor
- d: Ausdehnung von Lichtleiter und Detektor

## Patentansprüche

1. Vorrichtung zum Auslesen von Information, die in einer Speicherschicht (1) gespeichert ist, mit einer Lichtquelle (2) zum Aussenden von Anregungslicht (3) und einer Detektorvorrichtung (6) zum Erfassen von Emissionslicht (5), das durch das Anregungslicht (3) in der Speicherschicht (1) angeregt und von der Speicherschicht (1) abgestrahlt wird, wobei die Detektorvorrichtung (6) wenigstens eine lichtempfindliche Schicht (7) umfasst,
**dadurch gekennzeichnet, dass**
die Vorrichtung zum Auslesen von Information aus Speicherschichten (1) unterschiedlichen Typs ausgebildet ist, wobei der Spektralbereich des Anregungslichts (3) variiert werden kann um ihn an den Typ der jeweils auszulesenden Speicherschicht (1) anzupassen und die lichtempfindliche Schicht (7) Gallium-Arsenid-Phosphid (GaAsP) umfasst, so dass
- die Detektorvorrichtung (6) eine breite spektrale Empfindlichkeit im Bereich des Emissionslichts (5) aufweist, wodurch das von den Speicherschichten (1) unterschiedlichen Typs in unterschiedlichen Wellenlängenbereichen emittierte Emissionslicht (5) erfasst werden kann, und
- das beim Auslesen von Information aus Speicherschichten (1) unterschiedlichen Typs verwendete Anregungslicht (3), welches unterschiedliche Wellenlängen aufweist, durch die Detektorvorrichtung (6) unterdrückt wird.

2. Vorrichtung nach Anspruch 1, **dadurch gekennzeichnet, dass** die Detektorvorrichtung (6) ein Photodioden-Detektor oder ein CCD-Detektor ist.

3. Vorrichtung nach Anspruch 1 oder 2, **dadurch gekennzeichnet, dass** die Detektorvorrichtung (6) mehrere Einzelelemente (11) umfasst, die in wenigstens einer Zeile (10) angeordnet sind.

4. Vorrichtung nach Anspruch 3, **dadurch gekennzeichnet, dass** die lichtempfindlichen Schichten (7) der Einzelelemente (11) im Wesentlichen unmittelbar aneinander grenzen.

5. Vorrichtung nach einem der vorangehenden Ansprüche, **dadurch gekennzeichnet, dass** das Emissionslicht (5), das von der Speicherschicht (1) ausgesandt wird, von der Speicherschicht (1) über eine Lichtleitervorrichtung (13, 17) zu der Detektorvorrichtung (6) übertragen wird.

6. Vorrichtung nach Anspruch 5, **dadurch gekennzeichnet, dass** die Lichtleitervorrichtung (13, 17) wenigstens einen Lichtleiter (13) umfasst, der einen Kern (14) und einen Mantel (15) aufweist, wobei der Brechungsindex des Kerns höher ist als der des Mantels.

7. Vorrichtung nach Anspruch 5 oder 6, **dadurch gekennzeichnet, dass** die Lichtleitervorrichtung (13, 17) mehrere Lichtleiter (13) umfasst, die gebündelt sind.

8. Vorrichtung nach Anspruch 6 oder 7, **dadurch gekennzeichnet, dass** die mehreren Lichtleiter (13) jeweils einen Querschnitt in der Form eines regelmäßigen Polygons aufweisen, das insbesondere ein Sechseck oder ein Quadrat ist.

9. Vorrichtung nach einem der Ansprüche 6 bis 8, **dadurch gekennzeichnet, dass** jeder der mehreren Lichtleiter (13) im wesentlichen einem Einzelelement (11) der Detektorvorrichtung (6) zugeordnet ist und im Querschnitt die Ausdehnung jedes der mehreren Lichtleiter (13) wenigstens in einer Richtung kleiner als die Ausdehnung des entsprechenden Einzelelements (11) der Detektorvorrichtung (6) in derselben Richtung ist.

10. Vorrichtung nach einem der Ansprüche 5 bis 9, **dadurch gekennzeichnet, dass** der Abstand der Lichtleitervorrichtung (13)
- von der Detektorvorrichtung (6), insbesondere von der lichtempfindlichen Schicht (7) der Detektorvorrichtung (6), und/oder
- von der Speicherschicht (1)
kleiner als 400 µm und insbesondere kleiner als 200 µm ist.

11. Vorrichtung nach einem der vorangehenden Ansprüche, **dadurch gekennzeichnet, dass** sich die Lichtquelle (2) und die Detektorvorrichtung (6) auf den gegenüberliegenden Seiten der Speicherschicht (1) befinden.

12. Vorrichtung nach einem der Ansprüche 1 bis 10, **dadurch gekennzeichnet, dass** sich die Lichtquelle (2) und die Detektorvorrichtung (6) auf derselben Seite der Speicherschicht (1) befinden und das Anregungslicht von der Lichtquelle (2) schräg oder seitlich in die Speicherschicht (1) eingekoppelt wird.

13. Vorrichtung nach einem der Ansprüche 5 bis 12, **dadurch gekennzeichnet, dass** die Lichtleitervorrichtung (13, 17) blau eingefärbt ist.

14. Vorrichtung nach einem der Ansprüche 5 bis 13, **dadurch gekennzeichnet, dass** die Lichtleitervorrichtung (13, 17) mit der Detektorvorrichtung (6) verklebt oder verkittet ist.

15. Vorrichtung nach einem der vorangehenden Ansprüche, **dadurch gekennzeichnet, dass** ein Filter (8) vor der Detektorvorrichtung (6) angeordnet ist, durch welches Anregungslicht und längerwelliges Licht abgeschwächt wird.

16. Vorrichtung nach Anspruch 15, **dadurch gekennzeichnet, dass** das Filter ein Dünnschichtfilter oder ein Folienfilter mit einer Dicke von weniger als 100 µm ist.

17. Vorrichtung nach einem der Ansprüche 1 bis 5, **dadurch gekennzeichnet, dass** das Emissionslicht (5), das von der Speicherschicht (1) ausgesandt wird, von der Speicherschicht (1) über eine Abbildungsoptik (16a, 16b) zu der Detektorvorrichtung (6) übertragen wird.

18. Vorrichtung nach Anspruch 1, **dadurch gekennzeichnet, dass** die Wellenlänge des Anregungslichts (3) beim Auslesen von Information aus einer BaFBr:Eu-Speicherschicht von der Wellenlänge des Anregungslichts (3) beim Auslesen von Informationen aus einer CsBr:Eu-Speicherschicht verschieden ist.

19. Vorrichtung nach Anspruch 18, **dadurch gekennzeichnet, dass** die Wellenlänge des Anregungslichts (3) beim Auslesen von Informationen aus einer BaFBr:Eu-Speicherschicht 635 nm beträgt.

20. Vorrichtung nach Anspruch 18 oder 19, **dadurch gekennzeichnet, dass** die Wellenlänge des Anregungslichts (3) beim Auslesen von Informationen aus einer CsBr:Eu-Speicherschicht 685 nm beträgt.

## Claims

1. An apparatus for reading out information which is stored in a storage layer (1), with a light source (2) for emitting stimulation light (3) and a detector apparatus (6) for collecting emission light (5) which is stimulated by the stimulation light (3) in the storage layer (1) and is radiated by the storage layer (1), the detector apparatus (6) comprising at least one light-sensitive layer (7),
**characterised in that**
the apparatus is designed for reading out information from storage layers (1) of different types, it being possible to vary the spectral range of the stimulation light (3) so as to adapt it to the type of the respective storage layer (1) to be read out, and the light-sensitive layer (7) comprising gallium arsenide phosphide (GaAsP) so that
- the detector apparatus (6) has broad spectral sensitivity in the region of the emission light (5), by means of which the emission light (5) emitted by the storage layers (1) of different types in different wavelength ranges can be collected, and
- the stimulation light (3) used when reading out information from storage layers (1) of different types, which has different wavelengths, is suppressed by the detector apparatus (6).

2. The apparatus according to Claim 1, **characterised in that** the detector apparatus (6) is a photodiode detector or a CCD detector.

3. The apparatus according to Claim 1 or 2, **characterised in that** the detector apparatus (6) comprises several individual elements (11) which are disposed in at least one line (10).

4. The apparatus according to Claim 3, **characterised in that** the light-sensitive layers (7) of the individual elements (11) are substantially directly adjacent to one another.

5. The apparatus according to any of the preceding claims, **characterised in that** the emission light (5) which is emitted from the storage layer (1) is transferred from the storage layer (1) via a light conductor apparatus (13, 17) to the detector apparatus (6).

6. The apparatus according to Claim 5, **characterised in that** the light conductor apparatus (13, 17) comprises at least one light conductor (13) which has a core (14) and a shell (15), the refraction index of the core being higher than that of the shell.

7. The apparatus according to Claim 5 or 6, **characterised in that** the light conductor apparatus (13, 17) comprises several light conductors (13) which are bundled.

8. The apparatus according to Claim 6 or 7, **characterised in that** the plurality of light conductors (13) respectively have a cross-section in the form of a regular polygon which is in particular a hexagon or a square.

9. The apparatus according to any of Claims 6 to 8, **characterised in that** each of the plurality of light conductors (13) is substantially allocated to an individual element (11) of the detector apparatus (6) and that in the cross-section, the extension of each of the plurality of light conductors (13) is smaller at least in one direction than the extension of the corresponding individual element (11) of the detector apparatus (6) in the same direction.

10. The apparatus according to any of Claims 5 to 9, **characterised in that** the distance between the light conductor apparatus (13)
- and the detector apparatus (6), in particular the light-sensitive layer (7) of the detector apparatus (6), and/or
- the storage layer (1)
is less than 400 µm and in particular less than 200 µm.

11. The apparatus according to any of the preceding claims, **characterised in that** the light source (2) and the detector apparatus (6) are located on the opposite sides of the storage layer (1).

12. The apparatus according to any of Claims 1 to 10, **characterised in that** the light source (2) and the detector apparatus (6) are located on the same side of the storage layer (1) and the stimulation light from the light source (2) is introduced at an angle to or to the side of the storage layer (1).

13. The apparatus according to any of Claims 5 to 12, **characterised in that** the light conductor apparatus (13, 17) is coloured blue.

14. The apparatus according to any of Claims 5 to 13, **characterised in that** the light conductor apparatus (13, 17) is adhesively bonded or cemented to the detector apparatus (6).

15. The apparatus according to any of the preceding Claims, **characterised in that** a filter (8) is disposed in front of the detector apparatus (6) by means of which stimulation light and longer wave light are attenuated.

16. The apparatus according to Claim 15, **characterised in that** the filter is a thin layer filter or a film filter with a thickness of less than 100 µm.

17. The apparatus according to any of Claims 1 to 5, **characterised in that** the emission light (5) which is emitted by the storage layer (1) is transferred from the storage layer (1) via image optics (16a, 16b) to the detector apparatus (6).

18. The apparatus according to Claim 1, **characterised in that** the wavelength of the stimulation light (3) when reading out information from a BaFBr:Eu storage layer is different from the wavelength of the stimulation light (3) when reading out information from a CsBr:Eu storage layer.

19. The apparatus according to Claim 18, **characterised in that** the wavelength of the stimulation light (3) when reading out information from a BaFBr:Eu storage layer is 635 nm.

20. The apparatus according to Claim 18 or 19, **characterised in that** the wavelength of the stimulation light (3) when reading out information from a CsBr:Eu storage layer is 685 nm.

## Revendications

1. Dispositif de lecture d'informations stockées dans une couche de stockage (1), comportant une source lumineuse (2) servant à émettre de la lumière d'excitation (3) et un dispositif de détection (6) servant à détecter la lumière d'émission (5) qui est engendrée dans la couche de stockage (1) par la lumière d'excitation (3) et qui est rayonnée par la couche de stockage (1), le dispositif de détection (6) comprenant au moins une couche photosensible (7),
**caractérisé en ce que**
le dispositif est conçu pour lire des informations dans des couches de stockage (1) de différents types, le domaine spectral de la lumière d'excitation (3) pouvant être modifié pour l'adapter au type courant de couche de stockage à lire (1) et la couche photosensible (7) comprenant de l'arséniure-phosphure de gallium (GaAsP), de sorte que :
- le dispositif de détection (6) présente une sensibilité spectrale large dans le domaine de la lumière d'émission (5), grâce à quoi il est possible de détecter la lumière d'émission (5) émise dans différentes gammes de longueurs d'ondes par les couches de stockage (1) de différents types, et
- la lumière d'excitation (3) utilisée lors de la lecture d'informations dans des couches de stockage (1) de différents types, laquelle comporte différentes longueurs d'onde, est atténuée par le dispositif de détection (6).

2. Dispositif selon la revendication 1, **caractérisé en ce que** le dispositif de détection (6) est un détecteur à photodiodes ou un détecteur à couplage de charges (CCD).

3. Dispositif selon la revendication 1 ou 2, **caractérisé en ce que** le dispositif de détection (6) comprend plusieurs éléments individuels (11) qui sont disposés en au moins une rangée (10).

4. Dispositif selon la revendication 3, **caractérisé en ce que** les couches photosensibles (7) des éléments individuels (11) sont sensiblement contiguës entres elles.

5. Dispositif selon l'une des revendications précédentes, **caractérisé en ce que** la lumière d'émission (5) qui est émise par la couche de stockage (1) est transmise de la couche de stockage (1) au dispositif de détection (6) par l'intermédiaire d'un dispositif conducteur de lumière (13, 17).

6. Dispositif selon la revendication 5, **caractérisé en ce que** le dispositif conducteur de lumière (13, 17) comprend au moins un conducteur de lumière (13) qui comporte un noyau (14) et une enveloppe (15), l'indice de réfraction du noyau étant supérieur à celui de l'enveloppe.

7. Dispositif selon la revendication 5 ou 6, **caractérisé en ce que** le dispositif conducteur de lumière (13, 17) comprend plusieurs conducteurs de lumière (13) qui sont rassemblés en faisceau.

8. Dispositif selon la revendication 6 ou 7, **caractérisé en ce que** les conducteurs de lumière pluriels (13) ont tous une section en forme de polygone régulier, notamment d'hexagone ou de carré.

9. Dispositif selon l'une des revendications 6 à 8, **caractérisé en ce que** chacun des conducteurs de lumière pluriels (13) est sensiblement associé à un élément individuel (11) du dispositif de détection (6), et **en ce que**, en coupe transversale, l'extension de chacun des conducteurs de lumière pluriels (13), au moins dans une direction, est plus petite que l'extension de l'élément individuel correspondant (11) du dispositif de détection (6) dans la même direction.

10. Dispositif selon l'une des revendications 5 à 9, **caractérisé en ce que** l'éloignement du dispositif conducteur de lumière (13)
- par rapport au dispositif de détection (6), notamment par rapport à la couche photosensible (7) du dispositif de détection (6), et/ou
- par rapport à la couche de stockage (1)
est inférieur à 400 µm et, notamment, inférieur à 200 µm.

11. Dispositif selon l'une des revendications précédentes, **caractérisé en ce que** la source lumineuse (2) et le dispositif de détection (6) se trouvent respectivement d'un côté et de l'autre de la couche de stockage (1).

12. Dispositif selon l'une des revendications 1 à 10, **caractérisé en ce que** la source lumineuse (2) et le dispositif de détection (6) se trouvent du même côté de la couche de stockage (1), et **en ce que** la source lumineuse (2) introduit la lumière d'excitation obliquement ou latéralement dans la couche de stockage (1).

13. Dispositif selon l'une des revendications 5 à 12, **caractérisé en ce que** le dispositif conducteur de lumière (13, 17) est teinté en bleu.

14. Dispositif selon l'une des revendications 5 à 13, **caractérisé en ce que** le dispositif conducteur de lumière (13, 17) est collé ou cimenté au dispositif de détection (6).

15. Dispositif selon l'une des revendications précédentes, **caractérisé en ce qu'**un filtre (8) qui affaiblit la lumière d'excitation et la lumière de grande longueur d'onde est disposé devant le dispositif de détection (6).

16. Dispositif selon la revendication 15, **caractérisé en ce que** le filtre est un filtre à couche mince ou un filtre pelliculaire ayant une épaisseur inférieure à 100 µm.

17. Dispositif selon l'une des revendications 1 à 5, **caractérisé en ce que** la lumière d'émission (5) qui est émise par la couche de stockage (1) est transmise de la couche de stockage (1) au dispositif de détection (6) par l'intermédiaire d'une optique de reproduction (16a, 16b).

18. Dispositif selon la revendication 1, **caractérisé en ce que** la longueur d'onde de la lumière d'excitation (3) servant à lire des informations dans une couche de stockage de type BaFBr:Eu est différente de la longueur d'onde de la lumière d'excitation (3) servant à lire des informations dans une couche de stockage de type CsBr:Eu.

19. Dispositif selon la revendication 18, **caractérisé en ce que** la longueur d'onde de la lumière d'excitation (3) servant à lire des informations dans une couche de stockage de type BaFBr : Eu fait 635 nm.

20. Dispositif selon la revendication 18 ou 19, **caractérisé en ce que** la longueur d'onde de la lumière d'excitation (3) servant à lire des informations dans une couche de stockage de type CsBr:Eu fait 685 nm.
